(19) Europäisches Patentamt
European Patent Office
Office européen des brevets

(11) **EP 2 456 160 A1**

(12) **EUROPEAN PATENT APPLICATION**
published in accordance with Art. 153(4) EPC

(43) Date of publication:
**23.05.2012 Bulletin 2012/21**

(51) Int Cl.:
***H04L 29/06*** *(2006.01)*

(21) Application number: **10788806.7**

(22) Date of filing: **24.05.2010**

(86) International application number:
**PCT/CN2010/073125**

(87) International publication number:
**WO 2010/145410 (23.12.2010 Gazette 2010/51)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **19.06.2009   CN 200910086707**

(71) Applicant: **Tencent Technology (Shenzhen)
Company Limited
Shenzhen
Guangdon 518044 (CN)**

(72) Inventors:
• **MAO, Yiyu
Guangdong 518044 (CN)**
• **LI, Jianquan
Guangdong 518044 (CN)**

• **XUE, Deyi
Guangdong 518044 (CN)**
• **SUN, Jun
Guangdong 518044 (CN)**
• **QIU, Bin
Guangdong 518044 (CN)**
• **YANG, Shan
Guangdong 518044 (CN)**

(74) Representative: **Tomlinson, Kerry John et al
Dehns
St Bride's House
10 Salisbury Square
London
EC4Y 8JD (GB)**

(54) **METHOD AND DEVICE FOR SYNCHRONIZING TIME OF NETWORK GAMES**

(57)    Embodiments of the present invention provide a method and an apparatus for synchronizing network game time, so as to solve the problem that excessive memory and CPU resources are consumed and players with large delay have poor game experience. The present invention obtains a time difference between a network game server and a network game client according to a time that the network game server transmits a first data packet to the network game client, a time that the network game client transmits a second data packet to the network game server and a time that the network game server receives the second data packet from the network game client. Obtain an actual time that the network game client transmits the second data packet to the network game server during the game according to the time difference, and synchronize the time of the network game client with that of the network game server. The present invention is able to determine the time that the network game client transmits the second data packet to the network game server accurately, saves CPU and memory resources and improves the game experience.

FIG. 1

EP 2 456 160 A1

**Description**

FIELD OF THE INVENTION

The present invention relates to network game application techniques, and more particularly, to a method and apparatus for synchronizing network game time.

BACKGROUND OF THE INVENTION

Network game is one of Virtual Reality (VR) application techniques which attract much attention and have developed rapidly recently. With the development of the VR application techniques, network game has come into a Massively Multi-player Online Game (MMOG) era and game scale becomes larger and larger. Therefore, network game engines must have dramatic network processing capabilities and be able to synchronize status of the whole game world between server and client and implement security data transmission between players even when there is network delay, unavoidable packet loss and limited bandwidth. Since the current network games are based on the Internet techniques, and most MMOGs adopt a client/server model, problems such as network data synchronization delay and network data synchronization error have become a bottle of the whole game.

In the prior art, methods for solving the network game time synchronization problem mainly includes:

1. Time Warp synchronization scheme

It is commonly regarded that the Time Warp is a most important synchronization protocol in distributed systems. In the Time Warp scheme, there is no external synchronization among the processing nodes. The processing nodes simulate a local clock in different rates. Before executing an event, a processing node takes a snapshot of a current game state. If a delayed event is received and other events prior to the delayed event have been processed, i.e. the events being received are disordered; a rollback event will be issued according to the snapshot of a corresponding position of the delayed event. All events between the snapshot and the last executed event will be cancelled, and the state will roll back to an event earlier than the last executed event and re-execute.

2. Game time scheme

Most network games adopt the client/server model. As to network games have high real-time requirement, if the client transmits a time packet to the server and the server issues, after checking, a packet to the client for presenting, network delay and jitter will both deteriorate the game experience.

In the existing methods for solving the network time synchronization problem, when the Time Warp scheme is adopted, it is required to save a large number of snapshots and much memory and CPU resources will be occupied by frequent rollback operations, which affect calculating speeds of the server and the client. As to the network games adopting the network time synchronization scheme, whether the server sorts according to the time that the packets of clients arrives or the client forecasts the time that the server receives the data packet of the client and writes the time into the data packet and sends the data packet to the server, synchronization of network time cannot be ensured for players with large network delays.

SUMMARY OF THE INVENTION

Embodiments of the present invention provide a multi-channel video communication system applicable for various kinds of network conditions and terminal devices.

Embodiments of the present invention also provide a multi-channel video communication method applicable for various kinds of network conditions and terminal devices.

According to one embodiment of the present invention, a method for synchronizing network game time is provided. The method includes:

obtaining a time difference between a network game server and a network game client according to a time that the network game server transmits a first data packet to the network game client, a time that the network game client transmits a second data packet to the network game server and a time that the network game server receives the second data packet from the network game client; and

obtaining an actual time that the network game client transmits the second data packet to the network game server during the game according to the time difference between the network game server and the network game client, and synchronizing the time of the network game client with that of the network game server according to the actual time that the network game client transmits the second data packet to the network game server during the game.

According to another embodiment of the present invention, an apparatus for synchronizing network game time is provided. The apparatus includes:

a difference calculating unit, adapted to calculate a time difference between a network game server and a network game client according to a time that the network game server transmits a first data packet to the network game client, a time that the network client transmits a second data packet to the network game server and a time that the network game server receives the second data packet from the network game client; and

a time synchronizing unit, adapted to obtain an actual time that the network game client transmits the second data packet to the network game server during game according to the time difference between the network game sever and the network game client obtained by the difference calculating unit, and synchronize the time of the network game client and the network game client according to the actual time that the network game client transmits the second data packet to the network game server during game.

In the embodiments of the present invention, the network game server adjusts time initiatively. Thus, the time that the network game client transmits data packet to the network game server can be determined accurately. And there is no need to roll back frequently to adjust the time state of the network game client, which saves CPU and memory resources and can ensure network time synchronization without affecting the calculation speeds of the network game server and the network game client.

BRIEF DESCRIPTION OF THE DRAWINGS

FIG. 1 is a flowchart illustrating a method for synchronizing network game time according to an embodiment of the present invention.

FIG. 2 is a schematic diagram illustrating a time synchronizing procedure between the network game server and the network game client according to an embodiment of the present invention.

FIG. 3 is a schematic diagram illustrating a simplified time synchronizing procedure between the network game server and the network game client according to an embodiment of the present invention.

FIG. 4 is a schematic diagram illustrating a key event processing procedure when NPC attacks a role controlled by a game player according to an embodiment of the present invention.

FIG. 5 is a schematic diagram illustrating a procedure that the network game server checks the time that the network game client transmits the second data packet to the network game server according to an embodiment of the present invention.

FIG. 6 is a schematic diagram illustrating an apparatus for synchronizing network game time according to an embodiment of the present invention.

DETAILED DESCRIPTION OF THE INVENTION

In the technical solution for synchronizing network game time provided by the embodiments of the present invention, a time difference between the network game server and the network game client is firstly obtained according to the time that the network game server transmits a first data packet to the network game client, the time that the network game client transmits a second data packet to the network game server and the time that the network game server receives the second data packet from the network game client. Then, the actual time that the network game client transmits the second data packet to the network game server during game is obtained according to the time difference between the network game server and the network game client. And the time of the network game client and that of the network game client are synchronized according to the actual time that the network game client transmits the second data packet to the network game server during the game. On the one hand, affections to the calculation speeds of the network game server and the network game client brought out by a large amount of snapshots in the prior art can be avoided. On the other hand, network time synchronization can be ensured by the time difference between the network game server and the network game client.

The time difference between the network game server and the network game client may be calculated according to a following formula:

$$\theta = \frac{St_1 + St_0 - 2Ct_0}{2}$$

wherein $\theta$ denotes the time difference between the network game server and the network game client, $St_0$ denotes the time that the network game server receives the first data packet from the network game client, $St_1$ denotes the time that the network game server transmits the second data packet to the network game client, and $Ct_0$ denotes the time that the network client transmits the second data packet to the network game server.

As to the time synchronization between the network game server and the network game client, it is possible to obtain an error value of the time synchronization between the network game client and the network game client according to the time that the network game server transmits the first data packet to the network game client and the time that the network game server receives the second data packet from the network game client. If the time difference between the network game server and the network game client is larger than the error value, it is regarded that the time the network game client transmits the second data packet is error.

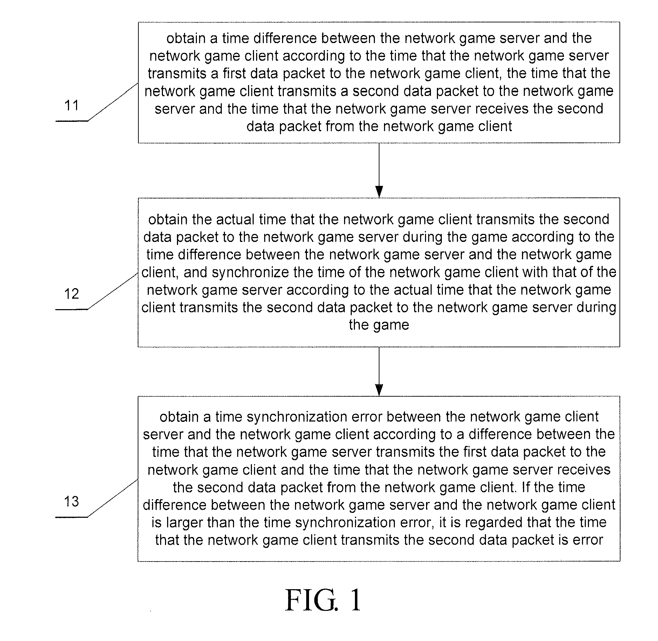

The present invention will be described in further detail with reference to accompanying drawings and embodiments to make the technical solution of the method for synchronizing network time provided by the present invention clearer. As shown in FIG. 1, the method includes the following steps.

Step 11, obtain a time difference between the network game server and the network game client according to the time that the network game server transmits a first data packet to the network game client, the time that the network game client transmits a second data packet to the network game server and the time that the network game server receives the second data packet from the network game client.

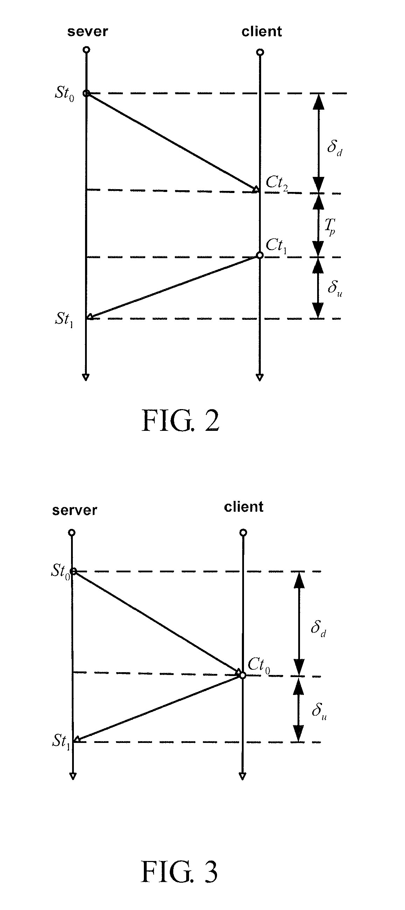

Firstly, the time difference between the network game server and the network game client is shown in **FIG.2.** The network game server transmits a first data packet to the network game client at time $St_0$. Suppose network delay is $\delta_d$. At network game server time $St_0 + \delta_d$, i.e. $Ct_2$, the network game client receives the first data packet transmitted by the network game server. The network game client processes the first data packet immediately after receiving the first data packet. Suppose the processing time is $T_p$. At network game server time $St_0 + \delta_d + T_p$, i.e. $Ct_1$, the network game client transmits a second data packet. After network delay time $\delta_u$, the second data packet arrives at the network game server. At this time, the network game server time is $St_1$. This is a complete network game server time synchronizing procedure. After receiving the second data packet from the network game client at time $St_1$, the network game server may calculate the time difference $\theta$ between the network game server and the network game client. The formula may be as follows:

$$\theta = \frac{(St_1 - Ct_1) - (Ct_2 - St_0)}{2}$$

In practical applications, the time that the network game client processes the first data packet received from the network game server is rather short, usually shorter than 1ms. Therefore, the processing time $T_p$ is almost zero. Then the first data packet transmitted by the network game server to the network game client is a simultaneous data packet, i.e. the network game server transmits the first data packet to the network game client and the network game client returns the second data packet immediately after receiving the simultaneous data packet. Accordingly, the time that the network game client transmits the second data packet to the network game server may also be regarded as the time that the network game client receives the first data packet from the network game server or may be regarded as the time that the network game client transmits the second data packet to the network game server. As such, **FIG. 3** may be obtained by simplifying **FIG. 2** and a following formula may be obtained based on the formula for calculating the time difference between the network game server and the network game client.

$$\theta = \frac{St_1 + St_0 - 2Ct_0}{2}$$

wherein $Ct_0$ denotes the time that the network game client receives the first data packet from the network game server or the time that the network game client transmits the second data packet to the network game server.

Step **12**, obtain the actual time that the network game client transmits the second data packet to the network game server during the game according to the time difference between the network game server and the network game client, and synchronize the time of the network game client with that of the network game client according to the actual time that the network game client transmits the second data packet to the network game server during the game.

After obtaining the time difference between the network game server and the network game client, the network game server calculates a difference between the time that the network game server receives the second data packet from the network game client and the time difference to obtain the actual time that the network game client transmits the second data packet to the network game server during the game, and determines a real order that events happen in game time according to the actual time that the network game client transmits the second data packet to the network game server during the game, so as to ensure a relatively good game equality, improve game experience of game players, and ensure network game synchronization without affecting the calculating speeds of the network game server and the network game client.

The synchronization of the time of the network game client and that of the network game client may be applied to the MMOG, in which the network game server generally needs to maintain actions, such as attack, finding path, walk and patrol of a series of Non Player Characters (NPCs). The determination of the order that the NPC event and network game client event happen by the network game server become a key factor for synchronizing the time of the network game client and that of the network game client. Hereinafter, an embodiment will be given where the network game server determines the role controlled by a game player attacked by the NPC in a time-window manner.

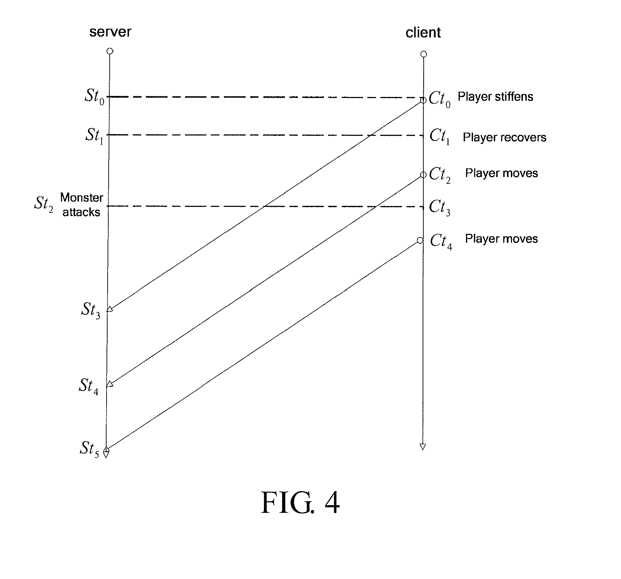

The role controlled by the game player takes a potion and stiffens at time $Ct_0$, and recovers at time $Ct_1$. At time $Ct_2$, the role moves out of an attacking place of the NPC. At time $Ct_3$, the NPC attacks the position where the role controlled by the game player is located at time $Ct_1$. If the player does not move, the role will be hit. The details are as shown in **FIG 4.**

Firstly, each network game server has an event queue for each player and there is a NPC for attacking at the network game server. The event will be described in detail hereinafter:

1) At server time $St_2$, the NPC attacks, the network game server pushes an attack event packet to the queue, and labels the attack event packet as a key event packet.

2) At time $St_3$, the network game server receives a data packet returned by the network game client, puts the event packet into the queue, and changes the $Ct_0$ filled in the data packet to $St_0$. Then, the network game server sorts all the data packets in the queue according to time. Finally, determine whether there is a data packet transmitted by the network game client after the key event labeled at step 1). If there is, it indicates that the network game server has received all the data packets transmitted by the network game client before time $St_3$ and it is ready to check the events. Since $Ct_0$ is before $St_3$, no processing is performed and keep on waiting for event packets of the network game client.

3) As to the data packet transmitted at time $Ct_2$ and received at time $St_4$, the processing is the same as that described above.

4) At time $St_5$, after receiving the data packet transmitted at time $Ct_4$, the network game server finds after sorting that the data packet of the network game client transmitted after time $St_3$ has been received. Since TCP ensures time sequence of the data packets, it may be regarded that all the data packets transmitted by the network game client before time $St_3$ have been received. At this time, it is ready to determine the attack event and determines whether the role controlled by the player is hit.

5) After the determination, unnecessary events in the queue may be deleted.

6) As to the determination of the key event at time $St_2$ by the network game server, there is a time limit, referred to as a time window. After waiting for a time window, the network game server checks the key event according to situation of the network game client currently acknowledged.

There may be a threshold for the time window described in step 6). For example, the time window may save events happen within 2 seconds. Suppose the packet transmission frequency of the NPC is 1/s, and the packet transmission frequency of the player is 5/s. Thus, the queue requires a space for storing 12 data packets. If the threshold is exceeded, it indicates that the delay of the network game client is larger than 2 seconds. The network game server checks the key event according to the situation it currently acknowledges. Suppose that a war server can bear 2000 players and 15 data packets for each player, each data packet is 100 byte, thus the network game server needs to reserve a memory of 2000*15*100/(1024*1024) ≈3M. It is acceptable for the network game server to occupy such amount of memory.

The above after-check manner using the time window may achieve the following effect: if the delay of the player is not longer than the time window (the threshold is 2 second which may be adjusted), the NPC attacks the role of the player, and the network game client presents the attack of the NPC normally. Since the effect of the attack needs to be determined by the network game server but the network game client cannot present the state of being hit or not being hit after the determination of the network game server, thus the action of the role controlled by the player may have some time delay (it may be explained as follows: if being hit, the role should fly, if the network game client transmits an attack packet to the network game server and the network game server notifies that the role is hit, there may be a 400ms time delay, i.e., the role of the network game client will not fly before the 400ms time delay. At this time, the time delay arises). After the network game client presents the attack of the NPC, the network game server calculates the server time corresponding to the client time according to the time included in the packet of the network game client. The server time minus a maximum error leaves a result. If the result is after the time that the NPC of the network game server attacks, the network game server performs the after-check to the attack (hit or not). If the network game server does not receive data packet from the network game client after the time threshold (2s), the network game server forecasts the position of the role when the NPC attacks according to path information included in prior data packet of the network game client. If the role is within the range of being attacked, it is regarded that the role is hit; otherwise, it is regarded that the role is not hit. Based on the above procedure, it is not necessary for the network game client to wait for the response of the network game server for each event. Thus, the time delay of the player is reduced and the game experience is improved. If the delay is larger than 2s, the network game server corrects the time of the network game client. At this time, there may time delay to some extent. But the time delay emerges only between players with large time delay and those with little time delay. There will be no time delay between players with little time delay. Thus, it is ensured that the players with time delay not exceeding the time window have better game experience. And the situation that the delay of one player results in delay of al the players will not happen.

Step 13, obtain a time synchronization error between the network game client and the network game client according to a difference between the time that the network game server transmits the first data packet to the network game client and the time that the network game server receives the second data packet from the network game client. If the time difference between the network game server and the network game client is larger than the time synchronization error, it is regarded that the time that the network game client transmits the second data packet is error.

As shown in **FIG. 3**, $Ct_0$ is between $St_1$, and $St_0$, the time synchronization error σ between the network game client and the network game client may be calculated according to a following formula:

$$\sigma = \frac{St_1 - St_0}{2}$$

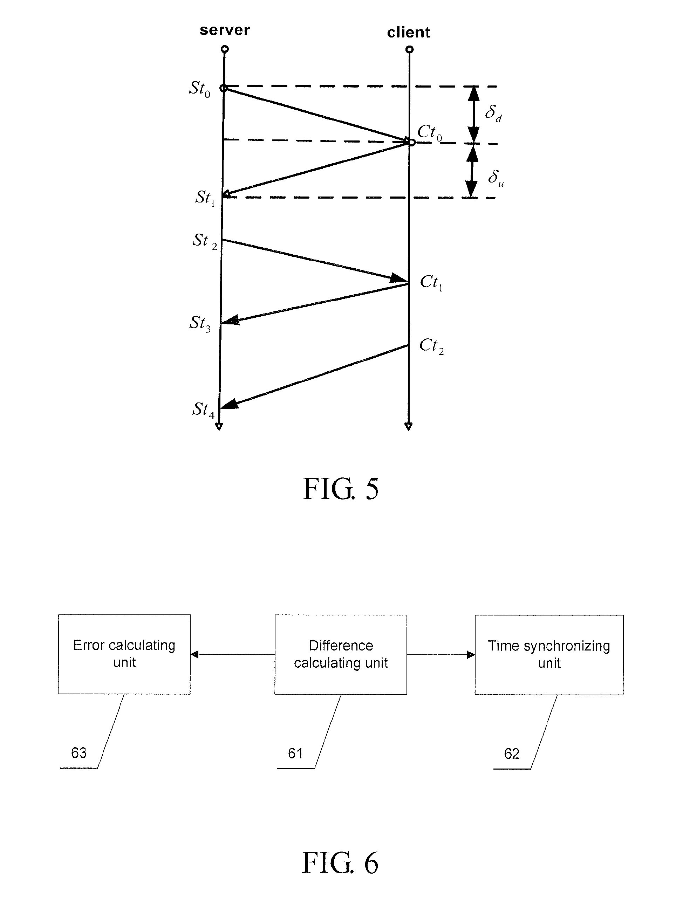

Through the initiative time adjusting by the network game server to the network game client, the network game server can not only realize the function of accurately deduce the time of the network game client, but also perform a range check to the time responded by the network game client according to the time synchronization error between the network game client and the network game client. If the time exceeds the range, the network game server may determine that the player cheated. Hereinafter, the range check to the time responded by the network game client will be described with reference to **FIG 5.**

After the above time synchronization procedure between the network game server and the network game client, the network game server transmits a third data packet to the network game client at time $St_2$. After receiving the third data packet, the network game client responds a fourth data packet to the network game server at time $Ct_1$. The network game server receives the fourth data packet at time $St_3$, retrieves the client time $Ct_1$, obtains an adjusted server time $St_1'$ according to the calculation formula of the time difference between the network game server and the network game client, if $St_1'$ is smaller than $St_2$-σ, it indicates that the network game client has obtained the third data packet transmitted by the network game server at time $St_2$ before server time $St_2$, this is not reasonable. Thus, it may be concluded that the network game client has modified time, i.e. the network game client may have used a cheating tool such as a decelerating plug-in. Similarly, at another client time $Ct_2$, the network game client transmits a fifth data packet filled with the client time $Ct_2$. The network game server receives the fifth data packet at time $St_4$ and performs a check. Firstly, retrieves client time $Ct_2$ and obtain an adjusted server time $St_2'$ according to the calculating formula of the time difference between the network game server and the network game client. According to the above discussion, it should be smaller than $St_2$ + σ. If $St_2'$ is larger than $St_2$ + σ, it indicates that the player may use the cheating tool such as accelerating plug-in. through the above method, the security performance of the game is improved, equality of the game is ensured and game experience of the players is improved.

Embodiments of the present invention also provide an apparatus for synchronizing network game time. As shown in **FIG. 6**, the apparatus includes the following units.

A difference calculating unit **61**, adapted to calculate a time difference between the network game server and the network game client according to the time that the network game server transmits a first data packet to the network game client, the time that the network client transmits a second data packet to the network game server and the time that the network game server receives the second data packet from the network game client.

A time synchronizing unit **62,** adapted to obtain the actual time that the network game client transmits the second data packet to the network game server during game according to the time difference between the network game sever and the network game client obtained by the difference calculating unit, and synchronize the time of the network game client and the network game client according to the actual time that the network game client transmits the second data packet to the network game server during game.

Error calculating unit **63,** adapted to obtain a time synchronization error between the network game client and the network game client according to the time difference between the time that the network game server transmits the first data packet to the network game client and the time that the network game server receives the second data packet from the network game client, and determine that the time that the network game client transmits the second data packet is error if the time difference between the network game server and the network game client obtained by the difference calculating unit is larger than the time synchronization error.

Further, the time that the network game client transmits the second data packet to the network game server is the tune that the network game client receives the first data packet from the network game server or the time that the network game client transmits the second data packet to the network game server. The time difference between the network game server and the network game client is calculated according to a following formula:

$$\theta = \frac{St_1 + St_0 - 2Ct_0}{2}$$

wherein θ denotes the time difference between the network game server and the network game client, $St_0$ denotes the time that the network game server receives the first data packet from the network game client, $St_1$ denotes the time that the network game server transmits the second data packet to the network game client, and $Ct_0$ denotes the time that the network game client transmits the second data packet to the network game server.

Firstly, the difference calculating unit **61** obtains the time difference between the network game server and the network game client according to the time that the network game server transmits the first data packet to the network game client, the time that the network game client transmits the second data packet to the network game server and the time that the network game server receives the second data packet from the network game client; then the time synchronizing unit **62** obtains the actual time that the network game client transmits the second data packet to the network game server during the game according to the time difference between the network game server and the network game client obtained by the difference calculating unit **61** and synchronizes the time of the network game client and the network game client according to the actual time that the network game client transmits the second data packet to the network game server during the game. Optionally, the error calculating unit **63** may obtain the time synchronization error between the network game client and the network game client according to a time difference between the time that the network game server transmits the first data packet to the network game client and the time that the network game server receives the second data packet from the network game client. If the time difference between the network game server and the network game client obtained by the difference calculating unit **61** is larger than the time synchronization error, it is regarded that the time that the network game client transmits the second data packet is error.

Implementations of detailed processing functions of above units in the system have been described above with respect to the method and will not be repeated herein.

What has been described and illustrated herein is a preferred example of the disclosure along with some of its variations. The terms, descriptions and figures used herein are set forth by way of illustration only and are not meant as limitations. Many variations are possible within the spirit and scope of the disclosure, which is intended to be defined by the following claims -- and their equivalents -- in which all terms are meant in their broadest reasonable sense unless otherwise indicated.

**Claims**

1. A method for synchronizing network game time, comprising:

   obtaining a time difference between a network game server and a network game client according to a time that the network game server transmits a first data packet to the network game client, a time that the network game client transmits a second data packet to the network game server and a time that the network game server receives the second data packet from the network game client; and
   obtaining an actual time that the network game client transmits the second data packet to the network game server during the game according to the time difference between the network game server and the network game client, and synchronizing the time of the network game client with that of the network game server according to the actual time that the network game client transmits the second data packet to the network game server during the game.

2. The method of claim 1, wherein the time that the network game client transmits the second data packet to the network game server is the time that the network game client receives the first data packet from the network game server or the time that the network game client transmits the second data packet to the network game server.

3. The method of claim 2, wherein when the time that the network game client receives the first data packet from the network game server is not the same as the time that the network game client transmits the second data packet to the network game server, the time difference is calculated according to:

$$\theta = \frac{\left(St_1 - Ct_1\right) - \left(Ct_2 - St_0\right)}{2}$$

wherein $\theta$ denotes that time difference between the network game server and the network game client, $St_0$ denotes the time that the network game server receives the first data packet from the network game client, $St_1$ denotes the time that the network server transmits the second data packet to the network game client, $Ct_2$ denotes the time that the network game client receives the first data packet from the network game server, and $Ct_1$ denotes the time that the network game client transmits the second data packet to the network game server.

4. The method of claim 1, wherein the time difference is calculated according to:

$$\theta = \frac{St_1 + St_0 - 2Ct_0}{2}$$

wherein $\theta$ denotes that time difference between the network game server and the network game client, $St_0$ denotes the time that the network game server receives the first data packet from the network game client, $St_1$ denotes the time that the network server transmits the second data packet to the network game client, and $Ct_0$ denotes the time that the network game client transmits the second data packet to the network game server.

5. The method of any one of claims 1 to 4, further comprising:

   obtaining a time synchronization error between the network game client and the network game client according to a difference between the time that the network game server transmits first data packet to the network game client and the time that the network game server receives the second data packet from the network game client, if the time difference is larger than the time synchronization error, determining that the time that the network game client transmits the second data packet is error

**6.** The method of claim 5, wherein the time synchronization error is calculated according to

$$\sigma = \frac{St_1 - St_0}{2}$$

wherein $St_0$ denotes that the time that the network game server receives the first data packet from the network game client, and $St_1$ denotes the time that the network game server transmits the second data packet to the network game client.

**7.** An apparatus for synchronizing network game time, comprising:

a difference calculating unit, adapted to calculate a time difference between a network game server and a network game client according to a time that the network game server transmits a first data packet to the network game client, a time that the network client transmits a second data packet to the network game server and a time that the network game server receives the second data packet from the network game client; and
a time synchronizing unit, adapted to obtain an actual time that the network game client transmits the second data packet to the network game server during game according to the time difference between the network game sever and the network game client obtained by the difference calculating unit, and synchronize the time of the network game client and the network game client according to the actual time that the network game client transmits the second data packet to the network game server during game.

**8.** The apparatus of claim 7, wherein in the difference calculating unit, the time that the network game client transmits the second data packet to the network game server is the time that the network game client receives the first data packet from the network game server or the time that the network game client transmits the second data packet to the network game server.

**9.** The apparatus of claim 8, wherein in the difference calculating unit, the time that the network game client receives the first data packet from the network game server is not the same as the time that the network game client transmits the second data packet to the network game server, the time difference is calculated according to:

$$\theta = \frac{(St_1 - Ct_1) - (Ct_2 - St_0)}{2}$$

wherein $\theta$ denotes that time difference between the network game server and the network game client, $St_0$ denotes the time that the network game server receives the first data packet from the network game client, $St_1$ denotes the time that the network server transmits the second data packet to the network game client, $Ct_2$ denotes the time that the network game client receives the first data packet from the network game server, and $Ct_1$ denotes the time that the network game client transmits the second data packet to the network game server.

**10.** The apparatus of claim 7, wherein in the difference calculating unit, the time difference is calculated according to:

$$\theta = \frac{St_1 + St_0 - 2Ct_0}{2}$$

wherein $\theta$ denotes that time difference between the network game server and the network game client, $St_0$ denotes the time that the network game server receives the first data packet from the network game client, $St_1$ denotes the time that the network server transmits the second data packet to the network game client, and $Ct0$ denotes the time that the network game client transmits the second data packet to the network game server.

**11.** The apparatus of any one of claim 7 to 10, further comprising:

an error calculating unit, adapted to obtain a time synchronization error between the network game client and the network game client according to the time difference between the time that the network game server transmits the first data packet to the network game client and the time that the network game server receives the second data packet from the network game client, and determine that the time that the network game client transmits the second data packet is error if the time difference between the network game server and the network game client obtained by the difference calculating unit is larger than the time synchronization error.

**12.** The apparatus of claim 11, wherein in the difference calculating unit, the time synchronization error is calculated according to

$$\sigma = \frac{St_1 - St_0}{2}$$

wherein $St_0$ denotes that the time that the network game server receives the first data packet from the network game client, and $St_1$ denotes the time that the network game server transmits the second data packet to the network game client.

11 — obtain a time difference between the network game server and the network game client according to the time that the network game server transmits a first data packet to the network game client, the time that the network game client transmits a second data packet to the network game server and the time that the network game server receives the second data packet from the network game client

12 — obtain the actual time that the network game client transmits the second data packet to the network game server during the game according to the time difference between the network game server and the network game client, and synchronize the time of the network game client with that of the network game server according to the actual time that the network game client transmits the second data packet to the network game server during the game

13 — obtain a time synchronization error between the network game client server and the network game client according to a difference between the time that the network game server transmits the first data packet to the network game client and the time that the network game server receives the second data packet from the network game client. If the time difference between the network game server and the network game client is larger than the time synchronization error, it is regarded that the time that the network game client transmits the second data packet is error

## FIG. 1

FIG. 2

FIG. 3

server                                    client

$St_0$ ----------------------------- $Ct_0$  Player stiffens

$St_1$ ----------------------------- $Ct_1$  Player recovers

$Ct_2$  Player moves

$St_2$ Monster attacks ------------- $Ct_3$

$Ct_4$  Player moves

$St_3$

$St_4$

$St_5$

# FIG. 4

FIG. 5

FIG. 6

# INTERNATIONAL SEARCH REPORT

| | International application No. |
|---|---|
| | PCT/CN2010/073125 |

**A. CLASSIFICATION OF SUBJECT MATTER**

H04L29/06 (2006.01) i
According to International Patent Classification (IPC) or to both national classification and IPC

**B. FIELDS SEARCHED**

Minimum documentation searched (classification system followed by classification symbols)

IPC: H04Q, H04W, H04L, H04B, H04J, H04M

Documentation searched other than minimum documentation to the extent that such documents are included in the fields searched

Electronic data base consulted during the international search (name of data base and, where practicable, search terms used)

WPI; EPODOC; CNPAT; CNKI: game, time, synchroniz+, network, server, client, master, slave, offset, difference

**C. DOCUMENTS CONSIDERED TO BE RELEVANT**

| Category* | Citation of document, with indication, where appropriate, of the relevant passages | Relevant to claim No. |
|---|---|---|
| PX | CN101577715A (TENCENT TECHNOLOGY (SHENZHEN) CO., LTD.) 11 Nov. 2009 (11.11.2009) see description page 4 line 23 to page 10 line 15, figures 1-7 | 1-12 |
| X | CN1794855A (HUAWEI TECHNOLOGIES CO., LTD.) 28 Jun. 2006 | 1-2, 5-6, 7-8, 11-12 |
| Y | (28.06.2006) see description page 3 line 24 to page 11 line 15, figures 1A-5 | 3-4, 9-10 |
| Y | CN101425891A (ZTE CORPORATION) 06 May 2009 (06.05.2009) see description page 6 line 3 to page 11 line 3, figures 1-3 | 3-4, 9-10 |

☒ Further documents are listed in the continuation of Box C.     ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 25 Jun. 2010 (25.06.2010) | **19 Aug. 2010 (19.08.2010)** |

| Name and mailing address of the ISA/CN | Authorized officer |
|---|---|
| The State Intellectual Property Office, the P.R.China 6 Xitucheng Rd., Jimen Bridge, Haidian District, Beijing, China 100088 Facsimile No. 86-10-62019451 | LI, Jun Telephone No. (86-10)62413171 |

Form PCT/ISA /210 (second sheet) (July 2009)

**INTERNATIONAL SEARCH REPORT**

| International application No. |
| --- |
| PCT/CN2010/073125 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | CN101459502A (HUAWEI TECHNOLOGIES CO., LTD.) 17 Jun. 2009 (17.06.2009) see the whole document | 1-12 |
| A | US2008/0175275A1 (SAMSUNG ELECTRONICS CO., LTD.) 24 Jul. 2008 (24.07.2008) see the whole document | 1-12 |
| A | WO2008/093600A1 (NEC CORPORATION) 07 Aug. 2008 (07.08.2008) see the whole document | 1-12 |

Form PCT/ISA /210 (continuation of second sheet ) (July 2009)

**INTERNATIONAL SEARCH REPORT**
Information on patent family members

International application No.

PCT/CN2010/073125

| Patent Documents referred in the Report | Publication Date | Patent Family | Publication Date |
|---|---|---|---|
| CN101577715A | 11.11.2009 | NONE | |
| CN1794855A | 28.06.2006 | WO2007000097A1 | 04.01.2007 |
| CN101425891A | 06.05.2009 | NONE | |
| CN101459502A | 17.06.2009 | WO2009076908A1 | 25.06.2009 |
| US2008/0175275A1 | 24.07.2008 | JP2008178086A | 31.07.2008 |
| | | KR20080069106A | 25.07.2008 |
| WO2008/093600A1 | 07.08.2008 | NONE | |

Form PCT/ISA /210 (patent family annex) (July 2009)